# EUROPEAN PATENT SPECIFICATION

(11) **EP 2 737 662 B1**
(45) Date of publication and mention of the grant of the patent: **23.11.2016**
(21) Application number: 11735880.4
(22) Date of filing: 27.07.2011
(51) Int. Cl.: H04L 12/24, H04L 29/06

(54) **DYNAMIC CLIENT AUTHORIZATION IN NETWORK MANAGEMENT SYSTEMS**
DYNAMISCHE CLIENT-AUTORISIERUNG IN NETZWERKVERWALTUNGSSYSTEMEN
AUTORISATION DYNAMIQUE DE CLIENT DANS DES SYSTÈMES DE GESTION DE RÉSEAU.

(43) Date of publication of application: 04.06.2014
(73) Proprietor: Telefonaktiebolaget LM Ericsson (publ), 164 83 Stockholm (SE)
(72) Inventor: ZÖMBIK, Lászlo, HU-8900 Zalaegerszeg (HU); HUSZÁR, Géza János, HU-1101 Budapest (HU); MILENOVIC, Aleksandar, Bealnamulla Athlone (IE)
(74) Representative: Ericsson
(86) International application number: PCT/EP2011/062876
(87) International publication number: WO 2013/013711

(56) References cited:
- EP-A1- 1 109 413
- WO-A2-2004/107104
- US-A1- 2006 202 964
- US-A1- 2007 240 231

## Description

### Field of the Invention

The present invention relates to network management systems for such as such as a telecommunications networks, and more particularly to the handling of client authorisation changes in a network management system.

### Background

Large distributed telecommunications networks, such 3G or 4G networks, may comprise many thousands, even tens of thousands, of network elements (e.g. server nodes, base stations, etc.). These are operated by different client operators, numbering maybe as many as 100-200, each controlling a part of the network. A management system is employed to manage the network resources. An example of a typical network management system is the Ericsson OSS-RC. This, as with many other management systems, employs an authorisation system, more details of which will be described below.

The following describes some general architectural concepts and definitions used in management systems, which are of relevance to the present disclosure. These concepts are widely known and used in several management systems, for example in OSS-RC, as well as in other (including some earlier) systems.

### Components

An *Authorization database* contains the authorization related information for the management system and/or for the management entities, players, etc. (see below).

An *Authorization service* provides an interface to the authorization database, handling requests and sending messages to the various components of the management system.

*Server side applications* contain the Business logic part of the applications of the management system (e.g. data collection and evaluation of the collected data).

*Client side applications* include the 'presentation layer' part of the applications, including, for example, Graphical User Interfaces (GUIs).

An *Application* includes both a client side application software and server side application software.

*Managed entities* are the nodes, entities or components of the network (e.g. wired, GSM, 3G, LTE telecommunications, etc.), which are managed by the management system.

### Players

A *Security Manager (SM)* administers the authorization database, and is therefore responsible for the authorization of the management system.

An *Operator* is a user of the management system, which could be in any one or more of the Fault, Configuration, Accounting, Performance, Security (FCAPS) roles as defined in the ISO Telecommunications Management Network model. An Operator may also be referred as a user.

A *Configuration Manager (CM)* is a user, which in this particular case has the task of installing (adding or removing) a node to/from the management system.

*Defined users* are those users which are added into the management system.

*Active users* are those users defined in the management system, which are actively using the resources of the management system (e.g. using a GUI).

### Network Topology

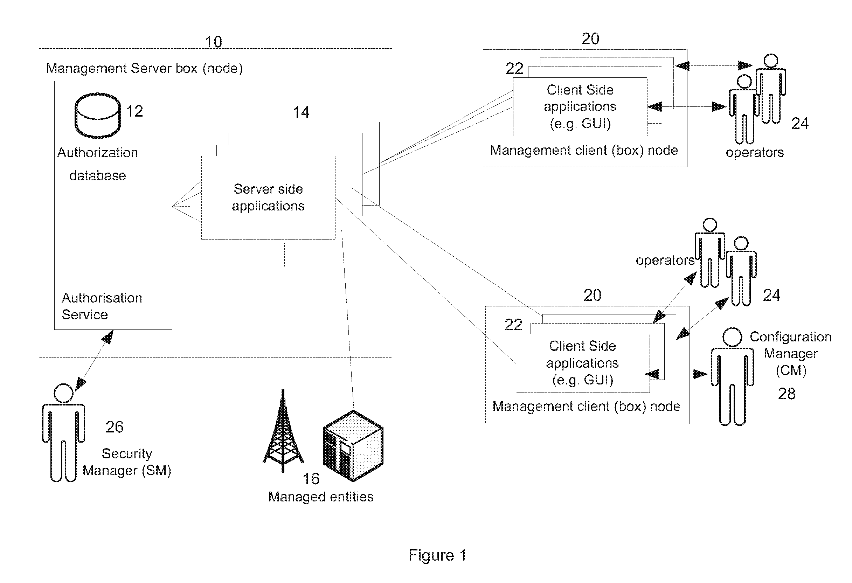

Figure 1 illustrates a typical network topology of a management system. As shown, the network nodes include a management server 10, various managed entities 16 and a number of client side management nodes 20 (only two are shown in Figure 1, but there would typically be many more). The management server 10 includes an authorisation database 12 with an authorisation service 13, and server side applications 14. A Security manager 26 interacts with the system via the authorisation service 13. The management client nodes 20 each include client side applications 22 (e.g. one or more GUIs). At each management client node 20, operators 24 communicate with the client side applications 22. These include a configuration manager 28 who is a user/operator having the Configuration manager role (as defined in the FCAPS model) dealing with the addition/removal of the nodes/network elements. The server side applications 14 communicate with managed entities 16, and also with the client side applications 22 on each of the management client nodes 20. As shown, the authorization database 12 and server side applications 14 typically reside on one management server node 10 (although this is not essential), while the client side applications 22 reside on a different management client nodes 20.

The authorization database 12 contains details of the network entities that each user is able to see or have some influence or control over, as well as the tasks or functions that a user can perform in relation to those entities. This may be described in terms of an abstract mapping of the authorization database involving the following database elements.

A *User* is a player of the management system - see *Defined users* above.

A *Role* is a definition of certain behaviours of users.

An *Activity* is a configuration property of a managed entity, for which the authorization database possesses an entry.

A *Target* is a subject for an authorization, typically, but not limited to one or more managed entities.

A *Role-Target relation* is a binding relationship between a target or set of targets and a role, where the subject of the functions (Activity) of the role is the target.

A *User-Role relation* is a binding relationship between a role, or set of roles, and a user, where the assignments of the user is the bound set of roles.

A *Role-Activity relation* is a binding relationship between an activity, or set of activities, and a role, where the functions of the roles are defined by this relation.

Management of the authorization database is performed by the Security manager (SM) and the Configuration Manager (CM). The SM has the right to manage the users and roles and can define roles and users by making changes in the Role-Activity relation, Role-Target relation and User-Role relations. The CM has the right to directly or indirectly manage the Target database only, for example by installing (adding or removing) a managed entity.

### Other terms

A *Visibility set* is the set of targets (typically managed entities), which is authorized to be presented to the user at the Presentation layer. This means, for example, that in the GUI only the authorized targets (managed entities) are allowed to be displayed.

*Authorization information of the client* covers all authorization settings (Activities) that have influence on the client side.

One example of an authorisation system is in the Ericsson's OSS-RC management system, which contains an authorization system, called TSS (Telecom Security Services). This comprises a database containing all the authorization information about OSS-RC and its managed entities. Components of OSS-RC send authorization requests to TSS. A typical authorization request contains the ID of the user who wants to perform an activity, the name of the activity and the subject of the activity. To achieve strong authorisation, the server side of the application (business logic) enforces authorization checks. However, the client side applications, such as a GUI, may also perform some authorization functions.

One problem with certain known authorisation systems is that any authorisation changes are not updated at the client until such time as the client next performs a start-up or a regular configuration update request. This means that there may be a time interval when a client application is executing based on an out-of-date authorisation between the time a change is made and the time when the configuration update is requested. The client operators may also be mislead by the above behaviour and make false decisions. Another problem is that it is only relevant for the management system to update any authorisation changes in the applications operated at the client (or clients) responsible for the particular network resource (or element) that has changed. However, any systems that broadcast authorisation updates will provide this information to many more clients, including clients that do not need to receive the information, resulting in significant unnecessary network traffic, unnecessary server processing consumption, as well as having possible adverse security implications.

EP1,109,413A discloses a network management system employing client GUIs. A view is created for a particular set of access control permissions, in which the basic network layout is shown but removing those parts of the network for which the user does not have access permission.

The present invention has been conceived with the foregoing in mind.

### Summary

According to a first aspect, there is provided a method of operating a telecommunications network management system. The management system comprises an authorisation service defining authorisations of client applications that each user of the management system is permitted to execute. The telecommunications network comprises managed resources in the form of network elements, which are targets of the management system to which the authorised client applications relate. The method comprises: making a change involving a change to one or more authorisations; generating an unsolicited notification of the authorisation change; and propagating the unsolicited notification to the authorised client applications in real time.

It is an advantage that the system informs applications about the authorisation changes by sending an unsolicited notification, which means that it does not wait to receive a request for updated authorisation information, but goes right ahead and generates and propagates the notification in real time - i.e. without delay.

According to a second aspect, there is provided an authorisation server in a telecommunications network management system. The authorisation server is configured to access data in an authorisation database defining authorisations of client applications that each user of the management system is permitted to execute. The telecommunications network comprises managed resources in the form of network elements, which are targets of the management system to which the authorised client applications relate. The authorisation server is further configured to detect a change involving a change to one or more authorisations, to generate an unsolicited notification of the authorisation change, and to propagate the unsolicited notification to the authorised client applications.

According to a third aspect, there is provided client side server in a telecommunications network management system. The server comprises one or more client applications, each application authorised to execute in association with managed resources in the form of network elements, which are targets of the management system, in accordance with one or more authorisations defined in the management system. The client side server is configured to receive unsolicited authorisation update notifications indicating a change of authorisation associated with a client side application executing in the server, and to implement the authorisation change in the client side application while the application is executing.

According to a fourth aspect, there is provided a telecommunications network management system. The system includes at least one client side server comprising one or more client applications executable by a user of the management system. An authorisation service defines authorisations of client applications that each user of the management system is permitted to execute. The telecommunications network comprises managed resources in the form of network elements, which are targets of the management system to which the authorised client applications relate. The authorisation server is further configured to detect a change involving a change to one or more authorisations, to generate an unsolicited notification of the authorisation change, and to send the unsolicited notification to the authorised client applications.

### Brief Description of the Drawings

Figure 1 is a schematic illustration of the topology of a network management system.
Figures 2A and 2B are flow diagrams illustrating two use cases that may result in authorisation changes.
Figure 3 is a flow diagram illustrating a process by which a management system handles updating authorisation changes.
Figure 4 to 10 are flow diagrams of further use cases that may result in authorisation changes.
Figure 11 is a flow diagram illustrating a process for updating authorisation changes in a running application.
Figure 12 is a flow diagram illustrating a procedure when a user starts an application.

### Detailed Description

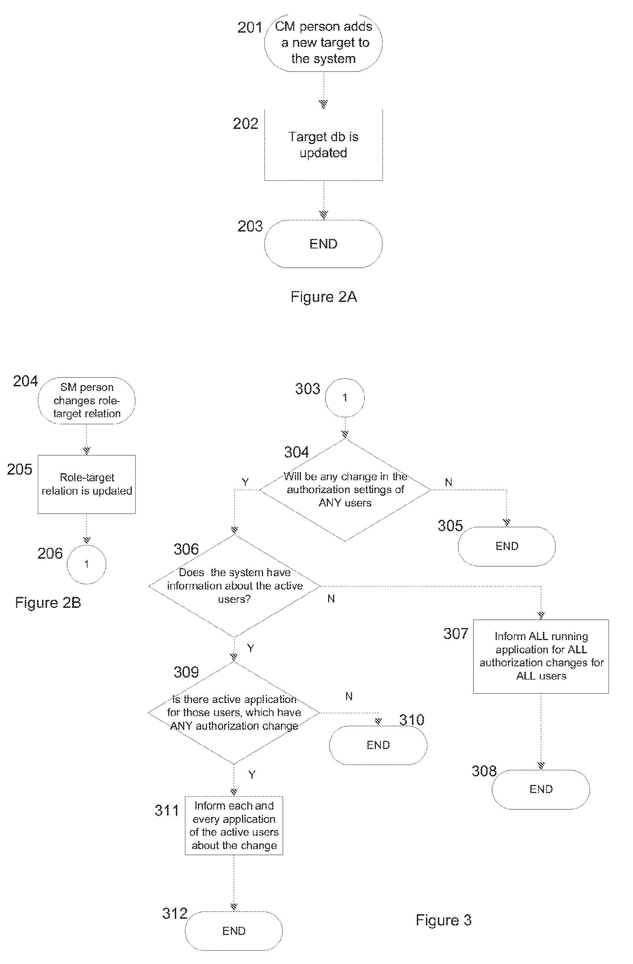

The embodiments described below relate to the method, and system/network server entities for performing the method, of operating a telecommunications network management system that comprises an authorisation service. These embodiments are considered in terms of a number of functionalities, that can be classified into distinct scenarios, where the players perform specific tasks. In the following discussion those scenarios have been grouped into a number of use cases that describe the typical user-related configuration steps. In addition, a generalized behaviour of a management application in accordance with an embodiment of the invention is presented. These are depicted and described in relation to the flow diagrams of Figures 2 - 12.

Note that the elements of the flowcharts (i.e. the steps indicated in each box) may be executed in different nodes of the network. The flowcharts consider only the functionality and do not consider any relationship to, or mapping of the network topology. The processes described are thus not restricted to execution on any particular part or node of the network.

Figure 2A illustrates the case where the configuration manager (CM) would like to install a new managed entity (target) to the system. At step 201 the CM adds a new target to the system. Typically, the CM will use an install wizard for that managed entity. As a result, at step 202, the database of the already installed managed entity will be updated by inserting the new managed entity as target. In this case a node is just added into the database, but nobody has yet been authorised or has access to it (which will only arise after another activity has been performed, as described below and shown in Figure 2B). The procedure therefore ends at step 203.

Figure 2B depicts the case where the security manager (SM) would like to configure the authorization settings of a particular role. The role is a definition of user behaviours and so is attached to certain users, thus the authorization settings of the users will also be changed. The change is either addition of a target to, or removal of a target from, the role-target relation. At step 204, the SM changes the role-target relation. Typically, the SM will use a configuration wizard to change the role-target relation. At step 205, the change is updated in the authorization database (Role-target relation is updated). The procedure then continues to step "1" 206 and the procedure of Figure 3

Figure 3 illustrates how the system handles the updating of the authorisation change. The procedure starts at step "1" 302 as a result of a change that has been instigated by the SM or the CM, such as the change of a role-target relation as described above with reference to Figure 2B. At step 304, the authorization service identifies whether the role-target relation has any impact on the authorization settings of any users defined in the management system. If there is no user impacted by the change, then the procedure ends at step 305. Otherwise, the procedure continues to step 306, which is a system related checkpoint. The authorisation service determines if there are components of the management system that have information about the active users. If the management system has no information about the active users, then, at step 307, the system informs all applications about the authorization change. This involves the system informing all running applications of all authorization changes for all users. The procedure then ends at step 308.

If the management system possesses up-to-date information about the active users, then, at step 309, the system computes and checks whether any of the identified authorisation changes are changes that involve the active applications of the active users. If not, then at step 310 the procedure ends. If there are active applications affected by the change, then at step 311 the authorization service informs each and every active application of the active users about the authorization change of the particular user. The procedure then ends at step 312.

Note that when the system informs applications about the authorisation changes (steps 307 and 311) it does this by sending an unsolicited notification. That is to say, it does not wait to receive a request for updated authorisation information, it goes right ahead and generates and propagates the notification in real time - i.e. without delay. Thus, as used herein the expression "unsolicited notification" is used to distinguish over a response to a request or query, and the term "propagates" is used to indicate that the notification is sent, or pushed out, without delay.

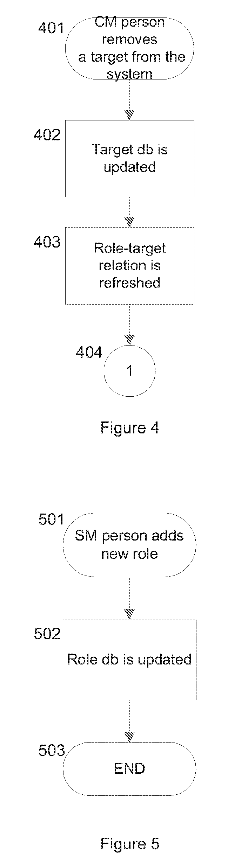

Figure 4 illustrates the procedure when the configuration manager (CM) removes a managed entity from the system. At step 401 the CM removes the target managed entity, typically using a remove wizard. As a result, at step 402, the database of the already installed managed entity is updated by removing the selected managed entity as a target. This removal of the managed entity requires that all role-target relations in the authorization database, which were bound to the removed target, are also removed, as shown at step 403. At step 404, the procedure then continues to step "1" (Figure 3).

Figure 5 illustrates the procedure in which the security manager (SM) adds a new role to the system. At step 501, the SM adds a new role, typically using an add wizard for that new role. As a result, at step 502, the authorization database is extended with the new role. Again, this activity only involves definition of the role in the database, without involving any authorisation, which will be dealt with by updating the role-target relation as shown in Figure 2B, and so at step 503, the procedure ends.

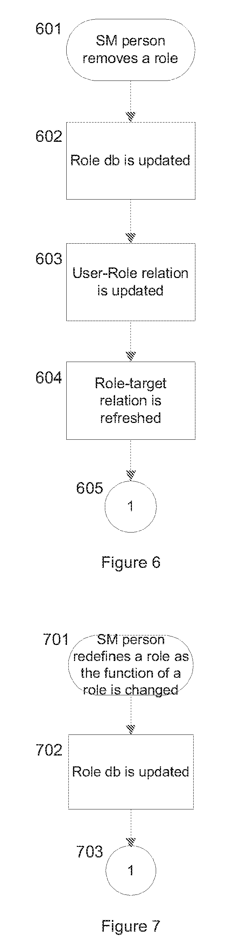

Figure 6 illustrates the procedure when the security manager (SM) removes an existing role. At step 601, the SM removes a role from the system, typically using a remove wizard. As a result, at step 602, the role is removed from the authorization database. This removal of the role requires that, as shown at step 603, all user-role relations in the authorization database, which were bound to the removed role, are also removed This removal of the role also requires that, as shown at step 604, all role-target relations in the authorization database, which were bound to the removed role, are also removed. The procedure then continues to step "1" (Figure 3).

Figure 7 illustrates the procedure where the security manager (SM) changes the function of a role (e.g. by changing the role-activity relation). At step 701, the SM redefines a role as the function of the role is changed, typically using a role change wizard. As a result, as shown at step 702, the role is updated in the authorization database. The procedure then continues to step "1" (Figure 3).

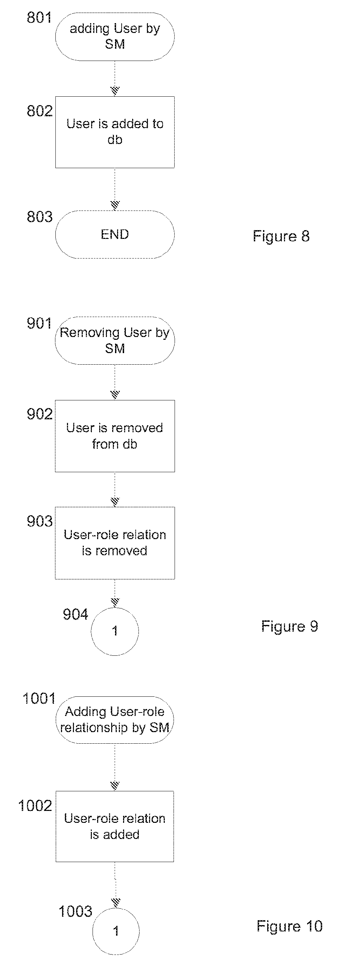

Figure 8 illustrates the procedure where the security manager (SM) defines a new user into the management system. At step 801, the SM adds a new user, typically using an add user wizard. As a result, as shown at step 801, the user is added to the authorization database. As the SM only defines the user, but does not assign any authorisation to him/her, the procedure then ends at step 803. The authorisation assignment is described with reference to Figure 10 below.

Figure 9 illustrates the procedure where the security manager (SM) removes a defined user from the management system. At step 901, the SM removes an existing user, typically using a remove user wizard. As a result, as shown at step 902, the user is removed from the authorization database. This removal of the user requires that all user-role relations in the authorization database, which were bound to the removed user, are also removed, as shown at step 903. At step 904, the procedure then continues to step "1" (Figure 3).

Figure 10 illustrates the procedure where the security manager (SM) extends the authorization database with a new user-role relation. At step 1001, the SM adds a new user-role relationship, typically using a user-role creation wizard. As a result, as shown at step 1002, the user-role relationship is added to the authorization database. At step 1003, the procedure then continues to step "1" (Figure 3).

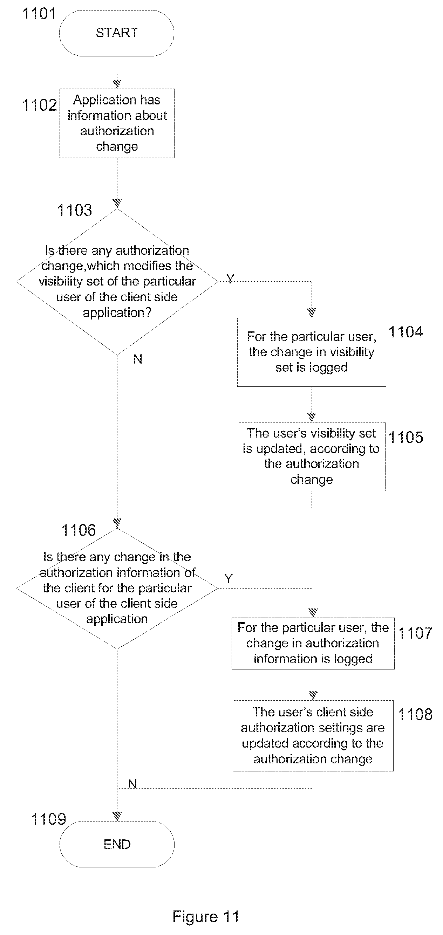

Figure 11 illustrates how a running client side application handles incoming information about authorization changes from the authorization service. This flowchart continues from the flowchart of Figure 3, for those situations where the system informs applications of authorisation changes (steps 307 and 311 of Figure 3). The process starts at step 1101, and then at step 1102 the application has received information from the authorisation service about changes of authorization settings. At step 1103, the application determines if there are any authorization changes that impact the visibility set of the user(s)/ operator(s) of the application. If there is no such change, the procedure continues at step 1106. If there are any such changes, then at step 1104 for those user(s) the change is logged. At step 1105, the user's visibility set is updated in accordance with the authorization change so that the change is reflected in the presentation layer of the application. This means, for example, that a target (managed entity) that has been added becomes visible in a user's GUI, or one that has been removed is no longer visible. The procedure then continues at step 1106.

At step 1106 a further determination is made whether the received authorization change from the authorization service has any influence on the client side authorization information for the user(s). If the answer is No, then the procedure ends at step 1109. If the answer is Yes, then at step 1107 the change is logged for those user(s). In addition, at step 1108, the authorization change at client side is reflected in the presentation layer of the application. The procedure then ends at step 1109. Note that it does not matter in which order the determinations are made at steps 1103 and 1106 and the subsequent tasks (steps 1104/5 and 1107/8) performed - i.e. the order could be swapped. Also, in some embodiments, only one of these determinations might be made and the subsequent tasks performed.

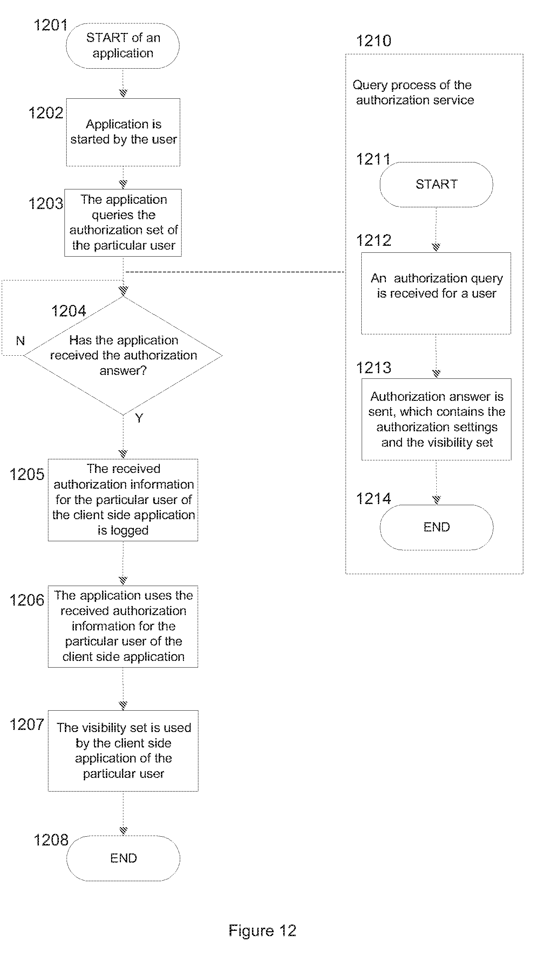

Figure 12 illustrates the procedure when a user/operator starts an application. Because an authorisation change may have occurred while the application was not active, the application will need to be updated when it is next started up. The procedure starts at step 1201. Execution of the application is started by the user/operator at step 1202. At step 1203, the application then queries the current authorization set of the user who started the application. Then, at step 1204 the application waits for the authorization service to respond by sending an authorisation answer. The authorisation answer contains updated authorisation information and the visibility set of the client for the particular user. At steps 1205 - 1207 the application, after receiving the visibility set and authorization information logs and sets those (as in Figure 11 at steps 1104, 1105, 1107 and 1108).

The box 1210 of Figure 12 illustrates the query process at the authorisation service. At step 1212, the authorization service receives the request sent at step 1203 by the recently started application. The authorisation service builds the visibility set and authorization information of the client for the particular user and at step 1213 responds by sending the authorisation answer back to the client side application.

The authorisation change information sent from the authorisation service to the client side applications - GUIs (or the whole presentation layer) - may involve the use of notification logic such as in a 3PPNotification, as described in "Notification Service Specification, Version 1.1 An Available Specification of the Object Management Group, Inc." (See http://www.omg.org/spec/NOT/1.1/PDF.) This may be used both for the unsolicited notifications and for notifications sent in response to the GUIs (or the presentation layer) executing a query of the authorization service at start-up as described above with reference to figure 12. Also, the GUIs (or other sub-components of presentation layer) may continuously/regularly query the authorization service, which then responds if there has been an authorisation change, the response triggering the procedure shown in Figure 11. Another option is for the client side application query to be generated based on a user interaction (or other asynchronous trigger) - for example if the user presses a right click of the mouse.

For the unsolicited notifications, a real-time notification mechanism is used, which propagates authorization information without delay and is more effective than querying or polling mechanisms or mechanisms which are triggered by human interactions. In one situation, the real-time notification mechanism propagates the authorization information without delay and without having any preliminary knowledge of the active users at the client sides in the presentation layers. In this option, the authorisation information is sent to all running applications, as shown in Figure 3, step 307. Otherwise, the real-time notification mechanism propagates the authorization information without delay, but with preliminary knowledge of the active users of the client side applications, as shown in Figure 3, step 311.

The procedures and functionality described above provide numerous advantageous features for users/operators. For example, the changes made by the SM in the authorization settings of the client side applications (through the authorization database) can be sent promptly (without delay) to the Client side applications. The change in the authorization of a target can be propagated to the presentation layer to dynamically update its authorization.

Another advantageous feature is that when the CM installs a managed entity into the network, then this will not appear to the operators (e.g. the node will not be visible in the GUI), unless the operator is authorized to view it. Moreover, if the operator is authorised to view it, it will appear promptly.

Another advantageous feature is that the SM can set the authorization settings for the different operators (either by changing a role-target relation, or by redefining a role, or by removing a role, or by removing a use, or by removing a user-role relationship, or by adding a user-role relationship) and the settings will be propagated promptly. Thus the SM can customize which operator is able to see a specific managed entity and which functions the operator is able to perform on a managed entity.

Another advantageous feature is that a managed entity appears to the operators (e.g. will be visible in the GUI) if and only if the CM defined it and the SM authorized it for the operator. When these two conditions are fulfilled, then the managed entity appears to the operator promptly, without delay.

Another advantageous feature is that a managed entity disappears from the operator's application (e.g. the managed entity will not be visible in the GUI) if either the CM undefined it, or the SM removes access authorisation for the operator. Again, the managed entity disappears from the operator's applications promptly, without delay.

Another advantage is that any authorization change events can be logged at the client side, or in the presentation layer of the client side applications.

Another advantageous feature is that it is possible to partition a large network so that it can be simulated as several smaller virtual management systems for different operators or operator groups. In this way, it is also possible to create client-separated domains, based on physical or topological or technology areas.

## Claims

1. A method of operating a telecommunications network management system that comprises an authorisation service administered by a Security Manager, SM, (26) and defining authorisations of client applications (22) that each user (24) of the management system is permitted to execute, and wherein the telecommunications network comprises managed resources in the form of network elements (16), which are targets of the management system to which the authorised client applications (22) relate and are added to or removed from the management system by a Configuration Manager, CM, (28),
**characterised in that** the method comprises:
making a change (201, 204) by the SM, (26) the change involving a change to one or more authorisations to define which users are able to see a specific managed entity and which functions of the management system a user is able to perform on a managed resource;
generating an unsolicited notification of the authorisation change; and
propagating (307, 311) the unsolicited notification to the client applications in real time.

2. The method of claim 1, wherein the notification of the authorisation change is sent only to the authorised client applications.

3. The method of claim 1, wherein the notification of the authorisation change is broadcasted to all client applications.

4. The method of claim 1, including:
determining (306) if there are components of the management system that have information about authorisations of active users (24) who are currently executing applications;
if the management system has no information about the active users, then informing (307) all executing applications about the authorization change; and
if the management system possesses information about the active users (24), and if there are executing applications affected by the change, then informing (311) each and every executing application of the active users about the authorization change affecting the particular application.

5. The method of any preceding claim further comprising receiving (1102) and implementing (1105, 1108) the authorisation change in at least one of the users' authorised client applications dynamically while the application is running.

6. The method of any preceding claim, further comprising displaying the authorisation changes on a graphical display provided by a presentation layer in the users' authorised client applications.

7. The method of any preceding claim wherein making a change comprises making a change to one or more of the targets, wherein the change comprises one or more of: adding a target to the network (201), removing a target from the network (401), granting an authorisation to a target, and removing an authorisation from a target.

8. An authorisation server (10) in a telecommunications network management system configured to access data in an authorisation database operated by a Security Manager, SM, (26) and defining authorisations of client applications (22) that each user of the management system is permitted to execute, and wherein the telecommunications network comprises managed resources in the form of network elements (16), which are targets of the management system to which the authorised client applications relate and are added to or removed from the management system by a Configuration Manager, CM, (28),
**characterised in that** the authorisation server (10) is further configured to detect a change made by the SM involving a change to one or more authorisations defining which users are able to see a specific managed entity and which functions of the management system a user (24) is able to perform on a managed resource,
to generate an unsolicited notification of the authorisation change; and
to propagate the unsolicited notification to the client applications.

9. The authorisation server of claim 8, configured to send the unsolicited notification of the authorisation change only to the authorised client applications (22).

10. The authorisation server of claim 8, configured to determine if there are components of the management system that have information about authorisations of active users (24) who are currently executing applications;
if the management system has no information about the active users, then to send the notification about the authorization change to all executing applications; and
if the management system possesses information about the active users, to determine if there are executing applications affected by the change, then to send the notification about the authorization change to each and every executing application of the active users affected by the authorization change.

11. A client side server (20) in a telecommunications network management system, the server comprising one or more client applications (22), each application authorised by an authorisation service administered by a Security Manager, SM, (26) to execute in association with managed resources in the form of network elements (16), which are targets of the management system in accordance with one or more authorisations defined in the management system and are added to or removed from the management system by a Configuration Manager, CM, (28),
**characterised in that** the client side server (20) is configured to receive unsolicited authorisation update notifications indicating a change of authorisation made by the SM (26) associated with a client side application (22) executing in the server (20) and defining which users (24) are able to see a specific managed entity and which functions of the management system a user is able to perform on a managed resource, and to implement the authorisation change in the client side application while the application is executing.

12. A telecommunications network management system comprising:
at least one client side server (20) comprising one or more client applications (22) executable by a user of the management system; and
an authorisation server (10) providing an authorisation service administered by a Security Manager, SM, (26) and defining authorisations of client applications that each user (24) of the management system is permitted to execute, wherein the telecommunications network comprises managed resources in the form of network elements (16), which are targets of the management system to which the authorised client applications relate and are added to or removed from the management system by a Configuration Manager, CM, (28),
**characterised in that** the authorisation server (10) is further configured to detect a change involving a change to one or more authorisations made by the SM (26) defining which users (24) are able to see a specific managed entity and which functions of the management system a user is able to perform on a managed resource, to generate an unsolicited notification of the authorisation change, and to send the unsolicited notification to the client applications (22).

## Patentansprüche

1. Verfahren zum Betreiben eines Telekommunikationsnetz-Verwaltungssystems, das einen Autorisierungsdienst umfasst, der von einem Sicherheits-Manager, SM, (26) verwaltet wird und Autorisierungen von Client-Anwendungen (22) definiert, die jeder Benutzer (24) des Verwaltungssystems ausführen darf, und wobei das Telekommunikationsnetz verwaltete Ressourcen in Form von Netzelementen (16) umfasst, welche Ziele des Verwaltungssystems sind, mit welchen die autorisierten Client-Anwendungen (22) in Beziehung stehen und welche von einem Konfigurationsmanager, CM, (28) zum Verwaltungssystem hinzugefügt und daraus entfernt werden,
**dadurch gekennzeichnet, dass** das Verfahren umfasst:
Vornehmen einer Änderung (201, 204) durch den SM, (26), wobei die Änderung eine Änderung an einer oder mehreren Autorisierungen umfasst, um zu definieren, welche Benutzer in der Lage sind, eine spezifische verwaltete Instanz zu sehen, und welche Funktionen des Verwaltungssystems ein Benutzer auf einer verwalteten Instanz ausführen kann;
Erzeugen einer nicht angeforderten Benachrichtigung der Autorisierungsänderung; und
Verbreiten (307, 311) der nicht angeforderten Benachrichtigung an die Client-Anwendungen in Echtzeit.

2. Verfahren nach Anspruch 1, wobei die Benachrichtigung der Autorisierungsänderung nur an die autorisierten Client-Anwendungen gesendet wird.

3. Verfahren nach Anspruch 1, wobei die Benachrichtigung der Autorisierungsänderung per Broadcast an alle Client-Anwendungen gesendet wird.

4. Verfahren nach Anspruch 1, umfassend:
Bestimmen (306), ob es Komponenten des Verwaltungssystems gibt, die Informationen über Autorisierungen von aktiven Benutzern (24) haben, die gegenwärtig Anwendungen ausführen;
Informieren (307) dann, wenn das Verwaltungssystem keine Informationen über die aktiven Benutzer hat, aller ausgeführten Anwendungen über die Autorisierungsänderung; und
Informieren (311) dann, wenn das Verwaltungssystem Informationen über die aktiven Benutzer (24) besitzt, und wenn es ausgeführte Anwendungen gibt, die von der Änderung betroffen sind, jeder einzelnen ausgeführten Anwendung der aktiven Benutzer über die Autorisierungsänderung, welche die jeweilige Anwendung betrifft.

5. Verfahren nach einem der vorhergehenden Anspruche, ferner umfassend dynamisches Empfangen (1102) und Implementieren (1105, 1108) der Autorisierungsänderung in mindestens einer der autorisierten Client-Anwendungen des Benutzers, während die Anwendung ausgeführt wird.

6. Verfahren nach einem der vorhergehenden Ansprüche, ferner umfassend ein Anzeigen der Autorisierungsänderungen auf einer grafischen Anzeige, die durch eine Darstellungsschicht in den autorisierten Client-Anwendungen des Benutzers bereitgestellt wird.

7. Verfahren nach einem der vorhergehenden Anspruche, wobei das Vornehmen einer Änderung ein Vornehmen einer Änderung an einem oder mehreren Zielen umfasst, wobei die Änderung eines oder mehreres umfasst von:
Hinzufügen eines Ziels zum Netz (201), Entfernen eines Ziels aus dem Netz (401), Erteilen einer Autorisierung an ein Ziel und Entziehen einer Autorisierung von einem Ziel.

8. Autorisierungsserver (10) in einem Telekommunikationsnetz-Verwaltungssystem, der so konfiguriert ist, dass er auf Daten in einer Autorisierungs-Datenbank zugreift, die von einem Sicherheits-Manager, SM, (26) betrieben wird und Autorisierungen von Client-Anwendungen (22) definiert, die jeder Benutzer des Verwaltungssystems ausführen darf, und wobei das Telekommunikationsnetz verwaltete Ressourcen in Form von Netzelementen (16) umfasst, welche Ziele des Verwaltungssystems sind, mit welchen die autorisierten Client-Anwendungen in Beziehung stehen und welche vom Konfigurationsmanager, CM, (28) zum Verwaltungssystem hinzugefügt und daraus entfernt werden,
**dadurch gekennzeichnet, dass** der Autorisierungsserver (10) ferner so konfiguriert ist, dass er eine vom SM vorgenommene Änderung erkennt, die eine Änderung an einer oder mehreren Autorisierungen umfasst, die definieren, welche Benutzer in der Lage sind, eine spezifische verwaltete Instanz zu sehen, und welche Funktionen des Verwaltungssystems ein Benutzer (24) auf einer verwalteten Instanz ausführen kann,
eine nicht angeforderte Benachrichtigung der Autorisierungsänderung erzeugt; und
die nicht angeforderte Benachrichtigung an die Client-Anwendungen verbreitet.

9. Autorisierungsserver nach Anspruch 8, der so konfiguriert ist, dass er die nicht angeforderte Benachrichtigung der Autorisierungsänderung nur an die autorisierten Client-Anwendungen (22) sendet.

10. Autorisierungsserver nach Anspruch 8, der so konfiguriert ist, dass er bestimmt, ob es Komponenten des Verwaltungssystems gibt, die Informationen über Autorisierungen von aktiven Benutzern (24) haben, die gegenwärtig Anwendungen ausführen;
dann, wenn das Verwaltungssystem keine Informationen über die aktiven Benutzer hat, die Benachrichtigung über die Autorisierungsänderung an alle ausgeführten Anwendungen sendet; und
wenn das Verwaltungssystem Informationen über die aktiven Benutzer besitzt, bestimmt, ob es ausgeführte Anwendungen gibt, die von der Änderung betroffen sind, und dann die Benachrichtigung über die Autorisierungsänderung an jede einzelne ausgeführte Anwendung der aktiven Benutzer sendet, die von der Autorisierungsänderung betroffen ist.

11. Client-seitiger Server (20) in einem Telekommunikationsnetz-Verwaltungssystem, wobei der Server eine oder mehrere Client-Anwendungen (22) umfasst, jede Anwendung von einem Autorisierungsdienst autorisiert ist, der von einem Sicherheits-Manager, SM, (26) verwaltet wird, zum Ausführen gemäß einer oder mehreren Autorisierungen in Verbindung mit verwalteten Ressourcen in Form von Netzelementen (16), welche Ziele des Verwaltungssystems sind, die von einem Konfigurationsmanager, CM, (28) zum Verwaltungssystem hinzugefügt oder daraus entfernt werden,
**dadurch gekennzeichnet, dass** der Client-seitige Server (20) so konfiguriert ist, dass er nicht angeforderte Autorisierungsaktualisierungsbenachrichtigungen empfängt, die eine vom SM (26) vorgenommene Autorisierungsänderung angeben, die mit einer Client-seitigen Anwendung (22) assoziiert ist, die im Server (20) ausgeführt wird, und definieren, welche Benutzer (24) in der Lage sind, eine spezifische verwaltete Instanz zu sehen, und welche Funktion des Verwaltungssystems ein Benutzer auf einer verwalteten Ressource ausführen kann, und die Autorisierungsänderung in der Client-seitigen Anwendung implementiert, während die Anwendung ausgeführt wird.

12. Telekommunikationsnetz-Verwaltungssystem, umfassend:
mindestens einen Client-seitigen Server (20), der eine oder mehrere Client-Anwendungen (22) umfasst, die von einem Benutzer des Verwaltungssystems ausgeführt werden können; und
einen Autorisierungsserver (10), der einen Autorisierungsdienst bereitstellt, der von einem Sicherheits-Manager, SM, (26) verwaltet wird und Autorisierungen von Client-Anwendungen definiert, die jeder Benutzer (24) des Verwaltungssystems ausführen darf, wobei das Telekommunikationsnetz verwaltete Ressourcen in Form von Netzelementen (16) umfasst, welche Ziele des Verwaltungssystems sind, mit welchen die autorisierten Client-Anwendungen in Beziehung stehen und welche von einem Konfigurationsmanager, CM, (28) zum Verwaltungssystem hinzugefügt und daraus entfernt werden,
**dadurch gekennzeichnet, dass** der Autorisierungsserver (10) ferner so konfiguriert ist, dass er eine Änderung erkennt, die eine vom SM (26) vorgenommene Änderung an einer oder mehreren Autorisierungen umfasst, die definieren, welche Benutzer (24) in der Lage sind, eine spezifische verwaltete Instanz zu sehen, und welche Funktion des Verwaltungssystems ein Benutzer auf einer verwalteten Instanz ausführen kann, eine nicht angeforderte Benachrichtigung der Autorisierungsänderung erzeugt und die nicht angeforderten Benachrichtigung an die Client-Anwendungen (22) sendet.

## Revendications

1. Procédé de fonctionnement d'un système de gestion de réseau de télécommunication qui comprend un service d'autorisation administré par un gestionnaire de sécurité, SM, (26) et définissant des autorisations d'applications client (22) que chaque utilisateur (24) du système de gestion est autorisé à exécuter, et dans lequel le réseau de télécommunications comprend des ressources gérées sous la forme d'éléments de réseau (16), qui sont des cibles du système de gestion auxquelles les applications client autorisées (22) sont liées et qui sont ajoutées ou supprimées du système de gestion par un gestionnaire de configuration, CM, (28),
**caractérisé en ce que** le procédé comprend :
l'exécution d'un changement (201, 204) par le SM (26), le changement impliquant un changement d'une ou plusieurs autorisations pour définir quels utilisateurs peuvent voir une entité gérée spécifique et quelles fonctions du système de gestion peuvent être effectuées par un utilisateur sur une ressource gérée ;
la génération d'une notification non sollicitée du changement d'autorisation ; et
la propagation (307, 311) de la notification non sollicitée aux applications client en temps réel.

2. Procédé selon la revendication 1, dans lequel la notification du changement d'autorisation est envoyée uniquement aux applications client autorisées.

3. Procédé selon la revendication 1, dans lequel la notification du changement d'autorisation est diffusée à toutes les applications client.

4. Procédé selon la revendication 1, comprenant :
la détermination (306) s'il y a des composants du système de gestion qui ont des informations relatives à des autorisations d'utilisateurs actifs (24) qui exécutent actuellement des applications ;
si le système de gestion n'a pas d'informations relatives à des utilisateurs actifs, alors l'information (307) de toutes les applications en cours d'exécution en ce qui concerne le changement d'autorisation ; et
si le système de gestion possède des informations relatives à des utilisateurs actifs (24), et s'il y a des applications en cours d'exécution affectées par le changement, alors l'information (311) de chaque application en cours d'exécution des utilisateurs actifs en ce qui concerne le changement d'autorisation affectant l'application particulière.

5. Procédé selon l'une quelconque des revendications précédentes, comprenant en outre la réception (1102) et la mise en oeuvre (1105, 1108) du changement d'autorisation dans au moins l'une des applications client autorisées des utilisateurs dynamiquement pendant que l'application est en cours d'exécution.

6. Procédé selon l'une quelconque des revendications précédentes, comprenant en outre l'affichage des changements d'autorisation sur un affichage graphique fourni par une couche de présentation dans les applications client autorisées des utilisateurs.

7. Procédé selon l'une quelconque des revendications précédentes, dans lequel l'exécution d'un changement comprend l'exécution d'un changement dans une ou plusieurs des cibles, dans lequel le changement comprend un ou plusieurs de : l'ajout d'une cible au réseau (201), la suppression d'une cible du réseau (401), l'octroi d'une autorisation à une cible, et la suppression d'une autorisation d'une cible.

8. Serveur d'autorisation (10) dans un système de gestion de réseau de télécommunications configuré pour accéder à des données dans une base de données d'autorisations exploitée par un gestionnaire de sécurité, SM, (26) et définissant des autorisations d'applications client (22) que chaque utilisateur du système de gestion est autorisé à exécuter, et dans lequel le réseau de télécommunications comprend des ressources gérées sous la forme d'éléments de réseau (16), qui sont des cibles du système de gestion auxquelles les applications client autorisées sont liées et qui sont ajoutées ou supprimées du système de gestion par un gestionnaire de configuration, CM, (28),
**caractérisé en ce que** le serveur d'autorisation (10) est en outre configuré pour effectuer la détection d'un changement effectué par le SM impliquant un changement d'une ou plusieurs autorisations définissant quels utilisateurs peuvent voir une entité gérée spécifique et quelles fonctions du système de gestion peuvent être effectuées par un utilisateur (24) sur une ressource gérée ;
la génération d'une notification non sollicitée du changement d'autorisation ; et
la propagation de la notification non sollicitée aux applications client.

9. Serveur d'autorisation selon la revendication 8, configuré pour effectuer l'envoi de la notification non sollicitée du changement d'autorisation uniquement aux applications client autorisées (22).

10. Serveur d'autorisation selon la revendication 8, configuré pour effectuer la détermination s'il y a des composants du système de gestion qui ont des informations relatives à des autorisations d'utilisateurs actifs (24) qui exécutent actuellement des applications ;
si le système de gestion n'a pas d'informations relatives à des utilisateurs actifs, alors l'envoi de la notification en ce qui concerne le changement d'autorisation à toutes les applications en cours d'exécution ; et
si le système de gestion possède des informations relatives à des utilisateurs actifs, la détermination s'il y a des applications en cours d'exécution affectées par le changement, puis l'envoi de la notification en ce qui concerne le changement d'autorisation à chaque application en cours d'exécution des utilisateurs actifs affectée par le changement d'autorisation.

11. Serveur côté client (20) dans un système de gestion de réseau de télécommunications, le serveur comprenant une ou plusieurs applications client (22), chaque application étant autorisée par un service d'autorisation administré par un gestionnaire de sécurité, SM, (26) à s'exécuter en association avec des ressources gérées sous la forme d'éléments de réseau (16), qui sont des cibles du système de gestion en fonction d'une ou plusieurs autorisations définies dans le système de gestion et qui sont ajoutées ou supprimées du système de gestion par un gestionnaire de configuration, CM, (28),
**caractérisé en ce que** le serveur côté client (20) est configuré pour effectuer la réception de notifications de mise à jour d'autorisation non sollicitées indiquant un changement d'autorisation effectué par le SM (26) associé à une application côté client (22) s'exécutant dans le serveur (20) et définissant quels utilisateurs (24) peuvent voir une entité gérée spécifique et quelles fonctions du système de gestion peuvent être effectuées par un utilisateur sur une ressource gérée, et la mise en oeuvre du changement d'autorisation dans l'application côté client pendant que l'application est en cours d'exécution.

12. Système de gestion de réseau de télécommunication comprenant :
au moins un serveur côté client (20) comprenant une ou plusieurs applications client (22) exécutables par un utilisateur du système de gestion ; et
un serveur d'autorisation (10) fournissant un service d'autorisation administrée par un gestionnaire de sécurité, SM, (26) et définissant des autorisations d'application client que chaque utilisateur (24) du système de gestion est autorisé à exécuter, dans lequel le réseau de télécommunications comprend des ressources gérées sous la forme d'éléments de réseau (16), qui sont des cibles du système de gestion auxquelles les applications client autorisées sont liées et sont ajoutées ou supprimées du système de gestion par un gestionnaire de configuration, CM, (28),
**caractérisé en ce que** le serveur d'autorisation (10) est en outre configuré pour effectuer la détection d'un changement impliquant un changement d'une ou plusieurs autorisations effectué par le SM (26) définissant quels utilisateurs (24) peuvent voir une entité gérée spécifique et quelles fonctions du système de gestion un utilisateur peut effectuer sur une ressource gérée, pour générer une notification non sollicitée du changement d'autorisation, et pour envoyer la notification non sollicitée aux applications client (22).
